# EUROPEAN PATENT APPLICATION

(11) **EP 4 212 019 A1**
(43) Date of publication of application: **19.07.2023**
(21) Application number: 21866129.6
(22) Date of filing: 07.11.2021
(51) Int. Cl.: A01N 43/16, A01N 65/03, A01P 21/00, C12P 19/12

(54) **ALGINATE DI-OLIGOSACCHARIDE PROTEIN COMPOSITION, PREPARATION METHOD THEREFOR, AND USE THEREOF**

(30) Priority: 08.09.2020 CN 202010934354
(71) Applicant: Beijing Leili Marine Bioindustry Inc., Beijing 100091 (CN)
(72) Inventor: TANG, Jie, Beijing 100091 (CN); YAN, Guofu, Beijing 100091 (CN); LI, Kaikai, Beijing 100091 (CN)
(74) Representative: Geskes, Christoph
(86) International application number: PCT/CN2021/129171
(87) International publication number: WO 2022/053077

(57) **Abstract**

The present invention relates to the field of algae-derived biostimulant or algae-derived biological agriculture, and in particular, to an alginate di-oligosaccharides Protein composition, a preparation method therefor, and a use thereof. In parts by weight, the composition consists of 1-40 parts of alginate oligosaccharides and 1-20 parts of fucoidan oligosaccharides. The present composition has a variety of biological activities, and is capable of regulating key physiological and biochemical indicators of crop immunomodulation, so as to regulate plant growth, and also increase crop disease resistance and stress resistance. The present composition can be used in crop health regulation and control (growth promotion, drought resistance, salt tolerance, disease resistance, etc.), and provides technical support to replacing chemical fertilizers and significantly reducing the usage amount of chemical pesticides.

## Description

### FIELD OF THIS APPLICATION

The present invention relates to the field of algae-derived biostimulant or algae-derived biological agriculture, and in particular, to an alginate di-oligosaccharides Protein composition (Alginic acid and Fucoidan Oligosaccharides Protein Complex), a preparation method therefor, and use thereof.

### BACKGROUND

For a long time, the excessive application of chemical fertilizers and chemical pesticides has caused serious damage to agricultural ecology, reduced the quality of cultivated land, and weakened the ability of crops to resist biological and abiotic stresses. The Ministry of Agriculture and Rural Affairs issued the Action Plan for Zero Growth of Fertilizer Use by 2020 and the Action Plan for Zero Growth of Pesticide Use by 2020, which require zero growth of fertilizer and pesticide.

The target of biostimulant is the crop itself. Biostimulants can improve the physiological and biochemical condition of plants, improve the effect of pesticides and the utilization rate of fertilizers, and improve the level of crop resistance to stress. Biostimulants can also improve the final yield of crops and the quality of agricultural products.

Biological pesticide refers to a preparation that uses living organisms (fungi, bacteria, insect viruses, transgenic biology, natural enemies, etc.) or their metabolites (pheromones, auxin, naphthoic acid, 2, 4-D, etc.) to kill or inhibit agricultural pests.

Alginate oligosaccharides (AOS) are oligomers which are composed of 2-7 glucuronic acid and mannuronic acid monomers from the degradation of algin by algin lyase, which have special effects on plant growth, improving plant immune ability and reducing disease invasion.

Fucoidan polysaccharide is a polysaccharide extract from seaweed (algae) or sea cucumber, which has been proved to have many functions such as anticoagulation, anti-tumor, anti-thrombosis, anti-virus, anti-oxidation and enhancing immune function. However, Fucoidan polysaccharide hashuge molecular weight, generally varies from tens of thousands to hundreds of thousands, which resultsin its low absorption and bioavailability. Therefore, it is necessary to hydrolyze fucoidan polysaccharideto appropriate molecular weight to obtain fucoidan oligosaccharide, so as to better play its role.

At present, there is no report regarding the use of Alginate and fucoidan oligosaccharides in combination.

### SUMMARY OF THE INVENTION

In view of this, the present invention provides an Alginic acid and Fucoidan Oligosaccharides Protein Complex(Composition) and its preparation method and use. The Alginic acid and Fucoidan Oligosaccharides Protein Complex can act on crop health regulation and has good synergistic effect.

In order to achieve the purpose of the invention, the invention provides the following technical solutions:
The invention provides an Alginic acid and Fucoidan Oligosaccharides Protein Complex, which is composed of 1 to 40 parts of Alginic acid oligosaccharides (alginate oligosaccharides) and 1 to 20 parts of fucoidan oligosaccharides by weight.

The Alginic acid and Fucoidan Oligosaccharides Protein Complex (AFOPC) of the present application, as a algae-derived biostimulant or biological pesticide, is obtained as bioactive substances from large algae through green, energy-saving and low-carbon processes such as biological enzymolysis, membrane separation and concentration, vaccum concentration, spray drying etc; the bioactive substances can activate the activity of crop enzymes and facilitate the defense substances and signal substances of crops playing a role or regulating the autoimmunity of crops in other ways, and do not have adverse effects on crops. AFOPC is mainly composed of Alginic acid oligosaccharides (AOS) and fucoidan oligosaccharides (FOS) with good synergy and suitable proportion, AOS has strong effects of promoting growth, improving photosynthesis and drought resistance, and FOS has strong effects of salt and alkali resistance and disease resistance. The effect of AFOPC crop immunomodulator on cucumber physiological indicators (SOD, POD, leaf photosynthetic parameters, leaf chlorophyll content, Fv/Fm, etc.) is significant. The use of AFOPC crop immunomodulator in the planting industry (crops, vegetables, fruits, etc.) and its effects (such as growth promotion, drought resistance, saline-alkali resistance, disease resistance) can reduce the use of chemical fertilizers and pesticides, and promote the improvement of crop yield and quality.

Preferably, the composition is composed of 20 to 40 parts of alginate oligosaccharides and 10 to 20 parts of fucoidan oligosaccharides.

Preferably, the composition is composed of 35 parts of alginate oligosaccharides and 15 parts of fucoidan oligosaccharides.

Preferably, the degree of polymerization of alginate oligosaccharide is 2~20, and the molecular weight is 2500~10000 Daltons.

Preferably, the degree of polymerization of alginate oligosaccharide is 10-15, and the molecular weight is 2700-4000 Daltons.

Preferably, the degree of polymerization of fucoidan oligosaccharide is 2~20, and the molecular weight is 2500~10000 Daltons.

Preferably, the degree of polymerization of fucoidan is 10-15, and the molecular weight is 2900-4400 Daltons.

The invention also provides a preparation method of the above AFOPC, including the following steps:
- The algae is first reacted with hydrochloric acid solution, then mixed with potassium carbonate, stirred for 0.5~3 hours, the resulting solution is centrifuged, and the supernatant is concentrated by microfiltration, ultrafiltration and nanofiltration to obtain concentrate;
- Mixing and extracting the concentrate with water for 2 to 9 hours under alkaline conditions at 40 to 100 °C, until the viscosity of the solution is 120 to 200 S; cooling the resulting solution to 30~40 °C and then being mixed with alginate lyase and hydrolyzed for 1~6 hours; Raising the temperature of the solution to 85~95 °C, adjusting the pH of the solution to 5.5~8.5 with stirring, and further stirring for 0.5~2 hours until the viscosity of the solution is 120~180S; then Adding fucoidan lyase to hydrolyze for 1 to 5 hours,so as to obtain enzymolysis solution;
- Further thermostatically stirring the enzymolysis solution for 0.5~3 hours, and then centrifuging the enzymolysis solution after being cooled to 55~65°C, taking the supernatant, and concentrating the supernatant by microfiltration, ultrafiltration, nanofiltration, and finally concentrating it with reduced pressure concentration and centrifugation to the viscosity of 100~150S.

Preferably, the initial enzyme activity of alginate lyase is 100-20001U/mL, and the initial enzyme activity of fucoidan lyase is 100-1000I/mL.

Preferably, the algae is brown algae.

The algae used in the present invention is natural wild or artificial cultured brown algae.

Preferably, the brown algae is selected from one or more of Laminaria, Sargassum or Undaria pinnatifida.

Preferably, the algae is dry algae or fresh algae.

The invention also provides Alginic acid and Fucoidan Oligosaccharides Protein preparation, including the Alginic acid and Fucoidan Oligosaccharides Protein composition and additives.

Preferably, the Alginic acid and Fucoidan Oligosaccharides Protein preparation comprises the following components by weight:
1 to 40 parts of alginate oligosaccharides, 1 to 20 parts of fucoidan oligosaccharides, 1 to 10 parts of protein, 1 to 20 parts of potassium hydroxide, and water added to make up100 parts in total.

Preferably, the Alginic acid and Fucoidan Oligosaccharides Protein preparation comprises the following components by weight:
20-40 parts of alginate oligosaccharides, 10-20 parts of fucoidan oligosaccharides, 5-10 parts of protein, 10-20 parts of potassium hydroxide, and water added to make up 100 parts in total.

Preferably, the Alginic acid and Fucoidan Oligosaccharides Protein preparation comprises the following components by weight:
1 to 40 parts of alginate oligosaccharides, 1 to 20 parts of fucoidan oligosaccharides, 1 to 10 parts of protein, and 1 to 20 parts of potassium hydroxide.

Preferably, the Alginic acid and Fucoidan Oligosaccharides Protein preparation comprises the following components by weight:
20 to 40 parts of alginate oligosaccharides, 10 to 20 parts of fucoidan oligosaccharides, 5 to 10 parts of protein, and 10 to 20 parts of potassium hydroxide.

The invention also provides the use of the above Alginic acid and Fucoidan Oligosaccharides Protein composition or Alginic acid and Fucoidan Oligosaccharides Protein preparation in the preparation of crop immunomodulator.

The invention provides Alginic acid and Fucoidan Oligosaccharides Protein composition and its preparation method and use. In weight, the composition is composed of 1 to 40 parts of alginate oligosaccharides and 1 to 20 parts of fucoidan oligosaccharides. Compared with the prior art, the AFOPC crop immunomodulator of the invention has the following technical effects:
AFOPC crop immunomodulator belongs to the field of algae-derived biostimulants or algae-derived biopesticides. It has a variety of biological activities and is capable of regulating key physiological and biochemical indicators of crop immunomodulation regulates the key physiological and biochemical indicators of crop immune regulation. It is the first time to develop a non-specific plant immunomodulator that can not only regulate plant growth, but also increase the resistance to disease and stress of crops. It acts on crop health regulation (growth promotion, drought resistance, salt resistance, disease resistance, etc.) and has good synergy, so as to provides technical and material support for replacing chemical fertilizers and chemical pesticides to significantly reduce the application amount.

### DETAILED DESCRIPTION OF THE INVENTION

The present invention discloses the Alginic acid and Fucoidan Oligosaccharides Protein complex and its preparation method and use. Those skilled in the art can learn from the content of this disclosure and properly modify the process parameters. In particular, it should be noted that all similar replacements and modifications are obvious to those skilled in the art, and they are considered to be included in the present invention. The method and use of the invention have been described through preferable embodiments. It is obvious that those skilled in the art can make modifications or appropriately changes and combination based on the method and use described herein without departing from the content, spirit and scope of the invention, so as to realize and apply the technology of the invention.

The crop immunomodulator of the invention is prepared by the following steps:

### 1) Pre-treatment:

Putting 10-30kg of Sargassum into an extraction tank, adding 1500kg of water, soaking for 1-5 hours under stirring conditions, then adding the prepared dilute hydrochloric acid solution (500ml/10L, i.e. 10 liters in total, containing 500 ml of concentrated hydrochloric acid) and 0.5-5kg potassium carbonate, further stirring for 0.5-3 hours, and then discharging and transferring the feed solution to a centrifugal device to make a centrifugation, and concentrating the centrifuged solution by microfiltration, ultrafiltration and nanofiltration, so as to obtain 500L concentrate in an extraction tank for use.

### 2) Comprehensive preparation

① Adding 1250kg of water to the concentrate in the extraction tank, slowly raising the temperature thereof to 40-100 °C, adding 1-6kg of potassium carbonate to the extraction tank, extracting for 1-5 hours, then adding 1000kg of water to the extraction tank, and further extracting for 1-4 hours. Measuring the viscosity of the resultant to ensure the viscosity being in the range of 120S-200S. Then cooling the resultant to a temperature of 35 ± 5 °C, adding 1-10kg of alginate lyase (AAL) (enzyme activity 100-2000IU/ml), and stirring for 1-6 hours for enzymolysis. Raising the temperature of the resultant to 90 ± 5 °C, and stirring for 0.5 hours, then adjusting the pH value of the reaction system to 5.5-8.5 with phosphoric acid, and further thermostatically stirring for 0.5-2 hours, and measuring the viscosity of the resultant to ensure the viscosity being in the range of 120S-200S.
② Adding 0.5-10kg fucoidan lyase (FDS) (enzyme activity 100-1000IU/ml) to 200L of the resultant concentrated solution obtained in step ①, and letting it stand for 1-5 hours, and then measuring the viscosity before and after standing.
③ Transferring the resulting solution in the above (2) step into an extraction tank, thermostatically stirring for 0.5-3 hours, and cooling the resultant to 60 ± 5 °C. Then making a centrifugation, and taking and transferring the supernatant into microfiltration, ultrafiltration and nanofiltration devices respectively to concentrate it to 300-700L, and finally concentrating it to 200L-300L.
④ Transferring the concentrated solution in step ③ to an evaporator, and further concentrating with reduced pressure the solution to 100L-150L; then transferring the solution to a centrifuge for centrifugation to obtain resultant with a viscosity of 100-150S (Ubbelohde viscosity) , and then being transferred to a bucket for use.

### 3) Finished product

The resultant in step 2 above can be directly used as AFOPC liquid preparation, or it can be transferred to the powder spraying process, and the spray dryer will process it to obtain AFOPC solid preparation, with the mesh size of 20-80 meshes and the moisture content of 2-6%.

Raw materials, reagents or equipment used in the Alginic acid and Fucoidan Oligosaccharides Protein composition and its preparation method and use are commercially available.

The present invention will be further described in combination with the following examples:

### EXAMPLE 1:

### 1. Pre-treatment: cleaning raw materials of sargassum

Putting 10kg of Sargassum into an extraction tank, adding 1500kg of water, soaking for one hour under stirring conditions, then adding the prepared dilute hydrochloric acid solution (500ml/10L) and 0.5kg potassium carbonate, further stirring for 0.5hours, and then discharging and transferring the feed solution to a centrifugal device to make a centrifugation, and concentrating the centrifuged solution by microfiltration, ultrafiltration and nanofiltration, so as to obtain 500L concentrate in an extraction tank for use.

### 2. Comprehensive preparation

① Adding 1250kg of water to the concentrate in the extraction tank, slowly raising the temperature thereof to 40°C, adding 1kg of potassium carbonate to the extraction tank, extracting for 1hours, then adding 1000kg of water to the extraction tank, and further extracting for 1hours. Measuring the viscosity of the resultant, and the viscosity being 120S. Then cooling the resultant to a temperature of 35 ± 5 °C, adding 1kg of alginate lyase (AAL) (enzyme activity 100IU/ml), and stirring for 1 hour for enzymolysis. Raising the temperature of the resultant to 90 ± 5 °C, and stirring for 0.5 hours, then adjusting the pH value of the reaction system to 5.5with phosphoric acid, and further thermostatically stirring for 0.5hours, and measuring the viscosity of the resultant, the viscosity being 120S.
② Adding 0.5kg fucoidan lyase (FDS) (enzyme activity 100IU/ml) to 200L of the resultant concentrated solution obtained in step ①, and letting it stand for 1 hour, and then measuring the viscosity before and after standing.
③ Transferring the resulting solution in the above (2) step into an extraction tank, thermostatically stirring for 0.5 hours, and cooling the resultant to 60 ± 5 °C. Then making a centrifugation, and taking and transferring the supernatant into microfiltration, ultrafiltration and nanofiltration devices respectively to concentrate it to 300 liters, and finally concentratingit to 200L.
④ Transferring the concentrated solution in step ③ to an evaporator, and further concentrating with reduced pressure the solution to 100L; then transferring the solution to a centrifuge for centrifugation to obtain liquid resultant with a viscosity of 100S (Ubbelohde viscosity) , and then being transferred to a bucket for use.

In the final liquid resultant, the oligosaccharides were detected by liquid chromatography (regarding the detection method, see example 1 of the text of Chinese patent number: ZL 2016 105 533 39.3), protein was detected by Kjeldahl method, potassium hydroxide was detected by the method provided in Chinese agricultural industry standard NY/T 1977-2010: the liquid resultant contains the following weight percentage components:
Alginate oligosaccharides (AOS) 35%, fucoidan oligosaccharides (FOS) 15%, protein 8%, potassium hydroxide 15%, water 27%.
wherein, for AOS, the degree of polymerization is 15, and the molecular weight is 4000 Dalton; for FOS, the polymerization degree is 12, and the molecular weight is 3500 Dalton.

3. Finished product
some of the liquid resultant in step 2 above was directly used as the AFOPC liquid preparation, other was transferred to the powder spraying process, and was processed by a spray dryer to obtain AFOPC solid preparation, with the mesh size of 20 and the moisture content was at 2%.

### EXAMPLE 2:

### 1. Pre-treatment: cleaning raw materials of sargassum

Putting 30kg of Sargassum into an extraction tank, adding 1500kg of water, soaking for 5 hours under stirring conditions, then adding the prepared dilute hydrochloric acid solution (500ml/10L) and 5kg potassium carbonate, further stirring for 3hours, and then discharging and transferring the feed solution to a centrifugal device to make a centrifugation, and concentrating the centrifuged solution by microfiltration, ultrafiltration and nanofiltration, so as to obtain 500L concentrate in an extraction tank for use.

### 2. Comprehensive preparation

① Adding 1250kg of water to the concentrate in the extraction tank, slowly raising the temperature thereof to 100°C, adding 6kg of potassium carbonate to the extraction tank, extracting for 5hours, then adding 1000kg of water to the extraction tank, and further extracting for 4 hours. Measuring the viscosity of the resultant and the viscosity being 200S. Then cooling the resultant to a temperature of 35 ± 5 °C, adding 10 kg of alginate lyase (AAL) (enzyme activity 100-2000IU/ml), and stirring for 6 hours for enzymolysis. Raising the temperature of the resultant to 90 ± 5 °C, and stirring for 0.5 hours, then adjusting the pH value of the reaction system to 8.5with phosphoric acid, and further thermostatically stirring for 2 hours, and measuring the viscosity of the resultant, the viscosity being 180S.
② Adding 10kg fucoidan lyase (FDS) (enzyme activity 1000IU/ml) to 200L of the resultant concentrated solution obtained in step ①, and letting it stand for 5 hours, and then measuring the viscosity before and after standing.
③ Transferring the resulting solution in the above (2) step into an extraction tank, thermostatically stirring for 3 hours, and cooling the resultant to 60 ± 5 °C. Then making a centrifugation, and taking and transferring the supernatant into microfiltration, ultrafiltration and nanofiltration devices respectively to concentrate it to 700L, and finally concentratingit to 300L.
④ Transferring the concentrated solution in step ③ to an evaporator, and further concentrating with reduced pressure the solution to 150L; then transferring the solution to a centrifuge for centrifugation to obtain liquid resultant with a viscosity of 150S (Ubbelohde viscosity), and then being transferred to a bucket for use.

In the final liquid resultant, the oligosaccharides were detected by liquid chromatography (regarding the detection method, see example 1 of the text of Chinese patent number: ZL201610553339. 3), protein was detected by Kjeldahl method, potassium hydroxide was detected by the method provided in Chinese agricultural industry standard NY/T 1977-2010: the liquid resultant contains the following weight percentage components:
Alginate oligosaccharides (AOS) 40%, fucoidan oligosaccharides (FOS) 20%, protein 10%, potassium hydroxide 20%, water10%.
wherein, for AOS, the degree of polymerization is 12, and the molecular weight is 3500 Dalton; for FOS, the polymerization degree is 15, and the molecular weight is 4400 Dalton.

3. Finished product
some of the liquid resultant in step 2 above was directly used as the AFOPC liquid preparation, other was transferred to the powder spraying process, and was processed by a spray dryer to obtain AFOPC solid preparation, with the mesh size of 80 and the moisture content was at 6%.

### EXAMPLE 3:

### 1. Pre-treatment: cleaning raw materials of sargassum

Putting 20kg of Sargassum into an extraction tank, adding 1500kg of water, soaking for 3 hours under stirring conditions, then adding the prepared dilute hydrochloric acid solution (500ml/10L) and 3kg potassium carbonate, further stirring for 2 hours, and then discharging and transferring the feed solution to a centrifugal device to make a centrifugation, and concentrating the centrifuged solution by microfiltration, ultrafiltration and nanofiltration, so as to obtain 500L concentrate in an extraction tank for use.

### 2. Comprehensive preparation

① Adding 1250kg of water to the concentrate in the extraction tank, slowly raising the temperature thereof to 60°C, adding 3kg of potassium carbonate to the extraction tank, extracting for 5hours, then adding 1000kg of water to the extraction tank, and further extracting for 1-4 hours. Measuring the viscosity of the resultant and the viscosity being 160S. Then cooling the resultant to a temperature of 35 ± 5 °C, adding 6 kg of alginate lyase (AAL) (enzyme activity 100-2000IU/ml), and stirring for 4 hours for enzymolysis. Raising the temperature of the resultant to 90 ± 5 °C, and stirring for 0.5 hours, then adjusting the pH value of the reaction system to 7.5with phosphoric acid, and further thermostatically stirring for 1 hours, and measuring the viscosity of the resultant, the viscosity being 150S.
② Adding 7kg fucoidan lyase (FDS) (enzyme activity 900IU/ml) to 200L of the resultant concentrated solution obtained in step ①, and letting it stand for 3 hours, and then measuring the viscosity before and after standing.
③ Transferring the resulting solution in the above (2) step into an extraction tank, thermostatically stirring for 2 hours, and cooling the resultant to 60 ± 5 °C. Then making a centrifugation, and taking and transferring the supernatant into microfiltration, ultrafiltration and nanofiltration devices respectively to concentrate it to 500L, and finally concentratingit to 250L.
④ Transferring the concentrated solution in step ③ to an evaporator, and further concentrating with reduced pressure the solution to 120L; then transferring the solution to a centrifuge for centrifugation to obtain liquid resultant with a viscosity of 130S (Ubbelohde viscosity) , and then being transferred to a bucket for use.

In the final liquid resultant, the oligosaccharides were detected by liquid chromatography (regarding the detection method, see example 1 of the text of Chinese patent number: ZL201610553339. 3), protein was detected by Kjeldahl method, potassium hydroxide was detected by the method provided in Chinese agricultural industry standard NY/T 1977-2010: the liquid resultant contains the following weight percentage components:
Alginate oligosaccharides (AOS) 30%, fucoidan oligosaccharides (FOS) 20%, protein 10%, potassium hydroxide 20%, water20%.
wherein, for AOS, the degree of polymerization is 10, and the molecular weight is 2700 Dalton; for FOS, the polymerization degree is 10, and the molecular weight is 2900 Dalton.

3. Finished product
some of the liquid resultant in step 2 above was directly used as the AFOPC liquid preparation, other was transferred to the powder spraying process, and was processed by a spray dryer to obtain AFOPC solid preparation, with the mesh size of 50 and the moisture content was at 4%.

### TEST EXAMPLE:

### 1. Test purpose:

The Effects of Alginic acid and Fucoidan Oligosaccharides Protein Complex (AFOPC)obtained from Example 1, Fucoidan Oligosaccharides Protein (FOSPC) obtained from step ② of Example 1 (obtained by precipitating fucoidan polysaccharides with 60% ethanol solution, then hydrolyzing with fucoidan lyase, and drying) and Alginic acid Oligosaccharides Protein (AOSPC) obtained from step ① of Example 1 on the control of tomato yellow leaf curl virus disease, to verify whether AFOPC has synergistic effect.

### 2. Test crops:

Tomato (JiaFen) ,cultivated in greenhouse.

### 3. Environment conditions and facility of cultivation:

The test site was selected in the Qianmu Garden of Qiuxian, Daxing District, Beijing, with a tomato planting area of 20 mu. The tomato yellow leaf curl virus disease occurred seriously in the test site.

### 4. Test design and arrangement

### 4.1 Reagent

**Table 1 Test reagent**

| No. | Compound | Dosage (g/mu) |
|---|---|---|
| A | Alginic acid and Fucoidan Oligosaccharides Protein Complex (AFOPC) | 40 |
| B | Fucoidan Oligosaccharides Protein (FOSPC) | 40 |
| C | Alginic acid Oligosaccharides Protein (AOSPC) | 40 |
| CK | Control Group | - |

| | | |
|---|---|---|
| Note: The dosage is calculated by the amount of purified oligosaccharide-protein. | | |

### 4.2 Test site arrangement

The test sites located on flat area, randomly distributed in four places, and marked and recorded.

### 4. 3 Application method

### 4.3.1 Schedule

Conventional high-pressure spray was used, and the first application(spraying) was carried out before the onset of tomato yellow leaf curl virus disease. The pesticide was evenly sprayed on the front and back of tomato leaves and the surface of fruits.

### 4.3.2 Application device

The spray apparatus is the conventional spray apparatus in the laboratory (15L pressure sprayer).

### 4.3 Application time and times

Before the onset of tomato yellow mosaic virus disease, spraying the compounds. The test was conducted on October 18 for the first time (before the onset of tomato yellow mosaic virus disease), October 25 for the second time (at the initial stage of tomato yellow mosaic virus disease), November 2 for the third time, and November 9 for the fourth time, a total of four times.

### 4.4 Test results and analysis

**Table 2. Description of tomato virus disease occurrence and tomato plant growth under different treatments**

| No. | Test results |
|---|---|
| A | Compared with the control group, the symptoms of yellow leaf curl virus disease was mild after 30 days from the first spraying, the new leaves spread, the incidence of new leaf curl was lower, the plant growth was relatively better than the control group, and the overall performance is well |
| B | Compared with the control group, the symptoms of yellow leaf curl virus disease was light after 30 days from the first spraying, most of the new leaves partially spread, the incidence of new leaf curl was lower than that of the control group, and the plant growth was slightly better, the overall performance was inconsistent |
| C | Compared with the control group, the yellow leaf curl virus disease was serious after 30 days from the first spraying, the new leaves did not well spread, the incidence of new leaf curl was serious, and the plant growth was not good. |
| CK | The tomato yellow leaf curl virus disease was very serious. Tomato grew slowly and nearly stopped growing. Tomato leaves curled seriously and the whole plant had no spread leaves. |

**Table 3. Occurrence of tomato yellow leaf curl virus in tomato plants with different treatments**

| No.( treatments) | Disease incidence(%) | Disease index(%) |
|---|---|---|
| A: AFOPC | 100±0.0a | 33.0±3.94c |
| B: FOSPC | 100±0.0a | 50.8±4.78b |
| C: AOSPC | 100±0.0a | 68.8±7.8a |
| CK | 100±0.0a | 69.8±7.92a |

Based on the above test results, it can be seen that in prevention and control of tomato yellow leaf curl virus disease, the effect of different treatments is as follows: Alginic acid and Fucoidan Oligosaccharides Protein Complex (AFOPC)> Fucoidan Oligosaccharides Protein (FOSPC)>Alginic acid Oligosaccharides Protein (AOSPC)>CK, which verifies that AFOPC of the present application has synergistic effect.

The above is only the preferred embodiment of the invention. It should be pointed out that for those of ordinary skill in the art, without departing from the principle of the present invention, improvements and modifications can be made. These improvements and modifications should also be regarded as falling in the protection scope of the present invention.

## Claims

1. An Alginic acid and Fucoidan Oligosaccharides Protein Complex, **characterized in that** the Complex is composed of 1 to 40 parts by weight of Alginate oligosaccharides and 1 to 20 parts by weight of fucoidan oligosaccharides .

2. The Alginic acid and Fucoidan Oligosaccharides Protein Complex according to claim 1, **characterized in that** the composition is composed of 20-40 parts by weight of Alginate oligosaccharides and 10 to 20 parts by weight of fucoidan oligosaccharides.

3. The Alginic acid and Fucoidan Oligosaccharides Protein Complex according to claim 1, **characterized in that** the Complex is composed of 35 parts by weight of Alginate oligosaccharides and 15 parts by weight of fucoidan oligosaccharides.

4. The Alginic acid and Fucoidan Oligosaccharides Protein Complex according to any one of claims 1 to 3, **characterized in that** the degree of polymerization of the alginate oligosaccharides is 2 to 20, and the molecular weight of the alginate oligosaccharides is 2500 to 10000 tons.

5. The Alginic acid and Fucoidan Oligosaccharides Protein Complex according to any one of claims 1 to 3, **characterized in that** the degree of polymerization of the fucoidan oligosaccharides is 2 to 20, and the molecular weight of the fucoidan oligosaccharides is 2500 to 10000 Daltons.

6. A preparation method of the Alginic acid and Fucoidan Oligosaccharides Protein Complex according to any one of claims 1 to 5, **characterized in that** the method comprises the following steps:
- Reacting algae with hydrochloric acid solution, mixing the resultant with potassium carbonate while stirring for 0.5~3 hours, centrifuging the resulting solution, taking the supernatant and concentrating it by microfiltration, ultrafiltration and nanofiltration, so as to obtain concentrate;
- Mixing the concentrate with water and extracting for 2 to 9 hours under alkaline conditions at 40 to 100 °C, until the viscosity of the solution is 120 to 200 S; cooling the resulting solution to 30~40°C and then mixing it with alginate lyase to hydrolyze for 1~6 hours; Raising the temperature of the reaction solution to 85~95°C, adjusting the pH of the solution to 5.5~8.5 with stirring, and further stirring for 0.5~2 hours until the viscosity of the solution being 120~180S; then Adding fucoidan lyase to hydrolyze for 1 to 5 hours, so as to obtain enzymolysis solution; and
- Further thermostatically stirring the enzymolysis solution for 0.5~3 hours, and then centrifuging the enzymolysis solution after being cooled to 55~65°C, taking the supernatant and concentrating it by microfiltration, ultrafiltration, nanofiltration, and finally concentrating it with reduced pressure concentration and centrifugation to the viscosity of 100~150S.

7. The preparation method according to claim 6, **characterized in that** the initial enzyme activity of the alginate lyase is 100-2000IU/mL, and the initial enzyme activity of the fucoidan lyase is 100-1000IU/mL.

8. The preparation method according to claim 6, **characterized in that** the algae is brown algae, and the brown algae is selected from one or more of Laminaria, sargassum or Undaria pinnatifida.

9. An Alginic acid and Fucoidan Oligosaccharides Protein preparation, **characterized in that** it comprises the Alginic acid and Fucoidan Oligosaccharides Protein according to any one of claims 1 to 5 and auxiliary agent.

10. Use of the Alginic acid and Fucoidan Oligosaccharides Protein Complex in any one of claims 1 to 5 or of the Alginic acid and Fucoidan Oligosaccharides Protein preparation in claim 9 in the preparation of crop immunomodulator.
